# EUROPÄISCHE PATENTSCHRIFT

(11) **EP 2 514 572 B1**
(45) Veröffentlichungstag und Bekanntmachung des Hinweises auf die Patenterteilung: **14.08.2019**
(21) Anmeldenummer: 12002364.3
(22) Anmeldetag: 30.03.2012
(51) Int. Cl.: B25J 9/16

(54) **Verfahren und Mittel zum Steuern einer Roboteranordnung**
Method and means for controlling a robot assembly
Procédé et moyen de commande d'un agencement de robot

(30) Priorität: 18.04.2011 DE 102011017398
(43) Veröffentlichungstag der Anmeldung: 24.10.2012
(73) Patentinhaber: KUKA Deutschland GmbH, 86165 Augsburg (DE)
(72) Erfinder: Keibel, Andreas, Dr., 86161 Augsburg (DE); Kohler, Thomas, Dr., 86368 Gersthofen (DE)
(74) Vertreter: Schlotter, Alexander Carolus Paul

(56) Entgegenhaltungen:
- DE-A1- 10 300 605
- DE-A1- 19 533 604
- DE-A1- 19 821 873
- GB-A- 2 327 512

## Beschreibung

Die vorliegende Erfindung betrifft ein Verfahren zum Steuern einer Roboteranordnung mit wenigstens einem Roboter sowie ein Mittel zur Durchführung eines solchen Verfahrens.

Bei verschiedenen robotergestützten Bearbeitungen von Bauteilen, etwa einem Schweißen, Kleben, Lackieren, Spanen oder dergleichen, können unterschiedlichste Bearbeitungsfehler auftreten, insbesondere Fehlfunktionen robotergeführter Werkzeuge wie Schweißzangen, Klebe- oder Lackierpistolen, Bohrern. So kann beispielsweise ein Schweißdraht-, Klebemittel- oder Lackvorrat ausgehen, ein Lichtbogen abreißen, eine Klebe- oder Lackierdüse verstopfen, ein Bohrer abbrechen oder -stumpfen.

Bisher werden für die verschiedenen Bearbeitungsprozesse und deren mögliche Bearbeitungsfehler individuell spezifische Fehlerroutinen erstellt. Dies erfordert Expertenwissen und ist aufgrund der jeweils spezifischen Neuerstellung aufwendig. Zudem sind solche Individuallösungen schwer wartbar. Für ähnliche Fehlertypen werden bei unterschiedlichen Prozessen teilweise völlig andere Fehlerroutinen entwickelt, ohne vorhandene Routinen synergetisch zu nutzen.

Die DE 195 33 604 A1 offenbart ein Verfahren sowie eine Vorrichtung zur Parametrierung einer Fehlerreaktion, insbesondere von numerisch gesteuerten Werkzeugmaschinen oder Robotern, wobei Fehlerquellen über eine Maskierung wirksam oder unwirksam geschaltet werden, insbesondere indem bei einem Maschinendatum, bei dem jeder vorgesehenen Fehlerquelle ein Bit zugeordnet ist, durch Setzen oder Löschen dieses Bits festgelegt wird, ob diese spezielle Fehlerquelle berücksichtigt wird. Weiterhin wird, sofern eine wirksame Fehlerquelle aktiv wird, eine dazugehörige Fehlerreaktion veranlaßt. Fehlerreaktionen werden ebenfalls über eine Maskierung wirksam oder unwirksam geschaltet, insbesondere auch indem bei einem Maschinendatum, bei dem jeder vorgesehenen Fehlerreaktion ein Bit zugeordnet ist, durch Setzen oder Löschen dieses Bits festgelegt wird, ob diese spezielle Fehlerreaktion ausgeführt wird. Fehlerquellen und/oder Fehlerreaktionen werden für jede Achse bzw. Spindel separat wirksam oder unwirksam geschaltet.

Die DE 103 00 605 A1 offenbart ein Verfahren zur Ablaufsteuerung insbesondere eines Roboters mit definierter Behebung von Ausnahmezuständen sowie eine Steuerung zur Durchführung des Verfahrens. Das Verfahren zur Ablaufsteuerung eines Roboters mit definierter Behebung von Ausnahmezuständen umfaßt hierbei die folgenden Verfahrensschritte: Definieren zumindest eines Ausnahmezustandes sowie eines dem Ausnahmezustand zugeordneten Ausnahmebehebungsprozesses; Starten der Ablaufsteuerung, wobei zur Ablaufsteuerung ein oder mehrere Anwenderprozesse gestartet und abgearbeitet werden; im Falle des Auftretens eines definierten Ausnahmezustandes: Starten und Abarbeiten eines Ausnahmebehebungsprozesses, umfassend die Schritte: i) Abarbeiten einer Abfrageprozedur zur Identifikation desjenigen Anwenderprozesses oder derjenigen Anwenderprozesse, der/die den definierten Ausnahmezustand erreicht hat/haben; ii) für jeden identifizierten Anwenderprozess, in dem der definierte Ausnahmezustand erreicht ist: Abarbeiten einer Behebungsprozedur zur Behebung des definierten Ausnahmezustands des/der identifizierten Anwenderprosesse(s); Beenden der Ablaufsteuerung.

Aufgabe der vorliegenden Erfindung ist es, eine Roboteranordnung bei einem Bearbeitungsfehler besser zu steuern.

Diese Aufgabe wird durch ein Verfahren mit den Merkmalen des Anspruchs 1 gelöst. Anspruch 10 stellt ein Mittel zur Durchführung eines erfindungsgemäßen Verfahrens unter Schutz, die Unteransprüche betreffen vorteilhafte Weiterbildungen. Dabei kann ein Mittel im Sinne der vorliegenden Erfindung hard- und/oder softwaretechnisch ausgebildet sein, insbesondere als Recheneinrichtung, die zur Durchführung eines erfindungsgemäßen Verfahrens eingerichtet ist, als Programm, vorzugsweise Programmmodul, welches ein erfindungsgemäßes Verfahren durchführt, wenn es in einer Recheneinrichtung ausgeführt wird, und/oder als Speichermedium, insbesondere Datenträger, mit einem solchen Programm(modul).

Einem Aspekt der vorliegenden Erfindung liegt die Idee zugrunde, ein verallgemeinertes Fehlermodell, das für eine Mehrzahl unterschiedlicher bzw. verschiedenartiger Bearbeitungsprozesse, insbesondere robotergestütztes Schweißen, Löten, Kleben, Nähen bzw. Heften, Lackieren bzw. Beschichten, Spanen, vorzugsweise Bohren, Schneiden, Schleifen, Nieten oder dergleichen, geeignet ist, zu erstellen und dieses Fehlermodell für den jeweiligen Prozess bzw. den einzelnen Bearbeitungsfehler, insbesondere eine Fehlfunktion eines robotergeführten Werkzeugs wie insbesondere ein Abbruch einer Schweißdraht-, (CFK-)Faden-, Klebe- bzw. Beschichtungsmittel- oder Lackzufuhr, etwa in Folge einer Verstopfung oder einer Erschöpfung eines Vorrates, einem Abriss eines Schweißbogens, einer Verschlechterung oder einem Versagen eines Bohrers, Messers, Fräsers, Schleifkopfes oder dergleichen, nur noch anzupassen.

Unter einem Fehlermodell wird dabei eine Fehlerroutine verstanden. Diese kann eine oder mehreren Vorschriften, insbesondere Arbeits- und/oder Rechenschritte und/oder logische Verzweigungen, umfassen, die im Fehlerfall abgearbeitet werden. Die Routine kann dabei bereits programmiert und vorzugsweise auch kompiliert sein oder aber auch der zugrundeliegende Algorithmus oder allgemeiner eine Struktur sein, die definiert, wie ein Fehler behandelt wird. Verallgemeinernd wird unter einem Fehlermodell im Sinne der vorliegenden Erfindung ein Modell, insbesondere ein mathematisches, informationstechnisches und/oder logisches Modell, für eine Fehlerbehandlung verstanden, von dem sich das jeweilige Verhalten im Fehlerfalle ableiten lässt. Insbesondere kann dieses Ableiten ein Kompilieren umfassen, welches vorzugsweise erst im Fehlerfalle einen maschinenlesbaren Code erzeugt. Zusätzlich oder alternativ kann ein Interpreter des Modells ermitteln, was zu tun ist. Ein solches allgemeines Fehlermodell kann vorteilhafterweise sehr einfach konfiguriert werden, vorzugsweise auch ohne dass spezielle Routinen programmiert werden müssen, wenn mit dem Modell alle in Frage kommenden Verhaltensweisen abgedeckt sind.

Das erfindungsgemäße Einrichten, Konfigurieren und Übertragen eines Fehlermodells kann zum Einen die Erstellung eines spezifischen Fehlermodells vereinfachen, da auf ein bereits vorhandenes allgemeines, nur noch individuell anzupassendes Fehlermodell zurückgegriffen werden kann. Vorteilhafterweise kann dies in einfacher, intuitiver Weise auch von Nicht-Experten durchgeführt werden. Zusätzlich oder alternativ kann eine Synergie genutzt werden, wenn beispielsweise bei der Erstellung eines spezifischen Fehlermodells auf Basis des allgemeinen Fehlermodells festgestellt wird, dass ein bestimmter Aspekt dort noch nicht vorgesehen ist. Wird daraufhin dieser Aspekt in dem allgemeinen Fehlermodell implementiert, kann hierauf auch bei der Erstellung anderer spezifischer Fehlermodelle zurückgegriffen werden. Wird beispielsweise bei der Erstellung eines Fehlermodells für ein Verstopfen einer Klebepistole erkannt, dass zur Vermeidung von Tropfen die Klebepistolendüse vom Werkstück entfernt werden sollte, kann eine entsprechende Ablagebewegung in dem allgemeinen Fehlermodell vorgesehen und bei der Erstellung eines spezifischen Fehlermodells für eine verstopfte Lackierdüse verwendet werden.

Allgemein ist ein Verfahren bzw. Mittel nach der vorliegenden Erfindung zum Steuern einer Roboteranordnung mit einem oder mehreren, insbesondere kooperierenden Robotern vorgesehen. Dabei wird unter einem Steuern bzw. einer Steuerung zur kompakteren Darstellung auch ein Regeln bzw. eine Regelung verstanden, unter kooperierenden Robotern insbesondere zwei oder mehr Roboter, die wenigstens zeitweise dasselbe Werkstück und/oder -zeug bearbeiten, insbesondere führen.

Um die Roboteranordnung zu steuern, wird für eine oder mehrere Gruppen unterschiedlicher, insbesondere verschiedenartiger Bearbeitungsprozesse mit jeweils vorgegebenen Bearbeitungsfehlern jeweils ein allgemeine Fehlermodell eingerichtet. Unter einem Einrichten wird insbesondere ein Neuerstellen, gleichermaßen jedoch auch ein Bereitstellen, etwa durch Laden, Aufrufen, Einbinden entsprechender Modelle, insbesondere Routinen, vorzugsweise aus einer Bibliothek, verstanden. Ein allgemeines Fehlermodell ist jeweils für eine ganze Gruppe unterschiedlicher Bearbeitungsprozesse vorgesehen. Die Bearbeitungsprozesse einer Gruppe unterscheiden sich durch Art und/oder Funktion robotergeführter Bearbeitungswerkzeuge, sie können sich insbesondere durch Roboterbahnen, insbesondere Bahnarten, Sensorik, Parameterwerte oder dergleichen unterscheiden. In einer bevorzugten Weiterbildung ist den Bearbeitungsprozessen einer Gruppe gemeinsam, dass eine Roboterbahn vorgegeben ist, auf der ein oder mehrere Roboter der Roboteranordnung sich bewegen und dabei mit robotergeführten Werkzeugen ein Werkstück bearbeiten. Beispielsweise können robotergestütztes Verbinden, insbesondere Schweißen, Löten, Kleben und/oder Nähen, robotergestütztes Trennen, insbesondere Spanen wie Fräsen, Bohren, Sägen, Schleifen und/oder Schneiden, robotergestütztes

Beschichten, insbesondere Lackieren und/oder robotergestütztes Transportieren, insbesondere Greifen, Fügen und dergleichen, eine Gruppe verschiedenartiger Bearbeitungsprozesse bilden.

Für jede Gruppe werden ein oder mehrere Bearbeitungsfehler vorgegeben, insbesondere abstrakt vordefiniert. Insbesondere kann ein Startfehler am Beginn eines Bearbeitungsprozesses und/oder einen Bahnfehler während der Abarbeitung des Prozesses vorgegeben werden, da hierfür gegebenenfalls unterschiedliche Fehlermodelle zweckmäßig sind.

Ein Startfehler kann insbesondere dann vorliegen, wenn der Bearbeitungsprozess trotz Startkommando nicht startet, weil beispielsweise eine Freigabe nicht vorliegt, ein Werkzeug eine Fehlfunktion aufweist oder dergleichen. Beispielsweise kann ein Startfehler vorliegen, wenn ein Lichtbogen nicht zündet, ein Bohrer nicht auf Solldrehzahl kommt, anfangs kein Klebstoff austritt, ein Pneumatik- oder Hydraulikdruck nicht aufgebaut wird, ein Greifer sich nicht öffnet oder dergleichen. In einer bevorzugten Weiterbildung ist ein Startfehler für einen fliegenden Start, bei dem wenigstens ein Roboter die Bearbeitung mit einer Anfangsgeschwindigkeit ungleich Null beginnt, und/oder ein Startfehler für einen Start mit stillstehendem Roboter vorgegeben.

Ein Bahnfehler kann insbesondere dann vorliegen, wenn der Bearbeitungsprozess außerplanmäßig während der Bahnfahrt unterbrochen wird, weil beispielsweise ein Nothalt ausgelöst, eine Ladung verloren oder nicht gegriffen wurde, eine Kollision aufgetreten ist, ein mit dem Roboter kooperierender Partner einen Fehler gemeldet hat, ein Werkzeug eine Fehlfunktion aufweist oder dergleichen. Beispielsweise kann ein Bahnfehler vorliegen, wenn ein Lichtbogen abreißt, ein Bohrer stecken bleibt, kein Klebstoff mehr austritt, ein Pneumatik- oder Hydraulikdruck abfällt, ein Greifer sich unvorhergesehen öffnet oder dergleichen.

Erfindungsgemäß wird nun für einen oder mehrere bestimmte bzw. konkrete Bearbeitungsfehler eines Prozesses der Gruppe jeweils eines der allgemeinen Fehlermodelle konfiguriert und an eine Steuerung der Roboteranordnung übertragen. Ein Übertragen bzw. ein sogenanntes Deployment im Sinne der vorliegenden Erfindung kann insbesondere eine Code-Generierung bzw. Erzeugung eines Programms, insbesondere Programmmoduls, für die Steuerung der Roboteranordnung, insbesondere eine Kompilierung umfassen.

Eine Konfiguration kann insbesondere eine Auswahl eines von mehreren allgemeinen Fehlermodellen und/oder dessen Parametrierung umfassen. Dabei können insbesondere Werte für Parameter, etwa eine gewünschte Wiederholungszahl vorgegeben, insbesondere eingegeben oder ausgewählt werden. Zusätzlich oder alternativ können in einer bevorzugten Ausführung auch Verzweigungen oder Optionen in dem allgemeinen Fehlermodell vorgegeben bzw. ausgewählt werden, etwa, ob ein Startfehler oder ein Bahnfehler behoben werden soll, wie verfahren werden soll, wenn der Fehler nicht behoben wurde und dergleichen.

In einer bevorzugten Ausführung weist ein allgemeines Fehlermodell eine Konfigurationsmöglichkeit eines, insbesondere ununterbrochenen oder wieder aufgenommenen, Weiterfahrens entlang einer Bearbeitungsbahn mit oder ohne Bearbeitung auf. Beispielsweise kann es, insbesondere bei kooperierenden Robotern, zweckmäßig sein, trotz eines Bahnfehlers, etwa dem Abreißen eines Lichtbogens oder Nähfadens, die Bearbeitungsbahn ununterbrochen weiter abzufahren, um nicht mit anderen Robotern oder dem Werkstück zu kollidieren. In einer bevorzugten Weiterbildung kann während des weiteren Abfahrens, sozusagen "fliegend", versucht werden, den Fehler, insbesondere eine Fehlfunktion eines Werkzeugs, zu beheben, etwa den Lichtbogen wieder zu zünden. Gelingt dies, wird die Bearbeitungsbahn ununterbrochener mit - während der Behebung der Fehlfunktion unterbrochener-Bearbeitung fortgesetzt, andernfalls, etwa bei Fadenriss, ohne Bearbeitung.

In einer bevorzugten Ausführung weist ein allgemeines Fehlermodell zusätzlich oder alternativ eine Konfigurationsmöglichkeit eines Anhaltens auf einer Bearbeitungsbahn auf. So kann insbesondere die vorgenannte "fliegende" Fehlerbehebung konfiguriert werden oder es kann wahlweise auf der Bahn angehalten werden, insbesondere, um zu versuchen, den Fehler zu beheben und eine Unterbrechung der Bearbeitung, etwa einen ungeschweißten oder nicht vernähten oder lackierten Abschnitt des Werkstücks zu vermeiden.

In einer bevorzugten Ausführung weist ein allgemeines Fehlermodell zusätzlich oder alternativ eine Konfigurationsmöglichkeit eines erneuten Abfahrens eines bereits überfahrenen Abschnittes einer Bearbeitungsbahn mit oder ohne Bearbeitung auf. Wird auf der Bearbeitungsbahn angehalten, können der oder die Roboter, vorzugsweise auf der Bearbeitungsbahn mit entgegengesetztem Richtungssinn aber ohne Bearbeitung, oder auch bahnfern, d.h. nicht auf der Bearbeitungsbahn, um eine vorgegebene Strecke zurückfahren und diese Strecke nach Behebung des Fehlers erneut abfahren. Dabei kann dieser Abschnitt beim erneuten Abfahren bearbeitet werden, so dass sich eine überlappende Bearbeitung ergibt. Beispielsweise kann in einem Abschnitt zweimal geschweißt oder genäht werden, um sicherzustellen, das längs der gesamten Bearbeitungsbahn stets wenigstens eine (Schweiß)Naht vorhanden ist. Beim erneuten Abfahren kann jedoch auch eine Bearbeitung unterbleiben, so dass die Bearbeitung einsetzt, wenn der Abschnitt abgefahren wurde und wieder auf der noch nicht bearbeiteten Bahn weitergefahren wird. Beispielsweise kann bei Verstopfen einer Klebe- oder Lackierdüse angehalten, diese gereinigt, und vor dem Bahnpunkt, an dem die Verstopfung aufgetreten ist, wieder aufgesetzt werden. Wird dieser Punkt überfahren, wird fliegend mit der Bearbeitung begonnen, um eine ungleichmäßige Lack- oder Klebeschicht zu vermeiden. Ein Überlappungsversatz beträgt dann im Gegensatz zum Abfahren unter Bearbeitung Null.

Ein erneutes Abfahren eines bereits überfahrenen Abschnittes einer Bearbeitungsbahn kann bahntreu oder bahnfern, insbesondere unter Annäherung an die Bearbeitungsbahn, erfolgen. Beispielsweise kann ein Werkzeug um eine konfigurierbare Ablage von der Bahn abgehoben und zurückversetzt werden, bevor es sich unter, insbesondere linearem, Abbau der Ablage beim erneuten Abfahren wieder der Bearbeitungsbahn nähert und an oder vor der Stelle, an der die Bearbeitung unterbrochen wurde, wieder auf der Bearbeitungsbahn verfährt.

In einer bevorzugten Ausführung weist ein allgemeines Fehlermodell zusätzlich oder alternativ eine Konfigurationsmöglichkeit eines Anfahrens einer Service-Station auf. Dort kann der Fehler behoben, etwa eine Düse gereinigt, ein Vorrat aufgefüllt oder ein Werkzeug ausgetauscht werden. Anschließend kann vorzugsweise ein bereits überfahrener Punkt der Bearbeitungsbahn bahnfern, insbesondere direkt, und/oderinsbesondere auf einem letzten Abschnitt vor dem Punkt, bahntreu, d.h. auf der Bearbeitungsbahn, erneut angefahren werden. So kann nach dem Aufsuchen einer Service-Station die Bearbeitung an der unterbrochenen Stelle oder mit einem Überlappungsversatz vor dieser wieder aufgenommen und fortgesetzt werden. Der Punkt kann insbesondere der Anfangspunkt der Bearbeitungsbahn oder eines ausgezeichneten Bahnabschnittes, etwa ein Stützpunkt, sein. Somit kann in einer bevorzugten Weiterbildung die Bearbeitungsbahn auch - insbesondere nach Anfahren einer Service-Station - von vorne begonnen werden, wobei, wie vorstehend erläutert, bereits bearbeitete Abschnitte erneut bearbeitet werden können, also eine, gegebenenfalls große Überlappung, etwa Doppel(schweiß)naht erzeugt wird, oder die Bearbeitung erst an oder kurz vor dem Bahnpunkt erneut beginnt, an dem sie zuvor abgebrochen wurde, um beispielsweise eine ungleichmäßige Lack-, Klebe- oder Schleiftiefe zu vermeiden oder reduzieren.

In einer bevorzugten Ausführung weist ein allgemeines Fehlermodell zusätzlich oder alternativ eine Konfigurationsmöglichkeit einer Fehlermeldung auf. Diese kann beispielsweise am Werkzeug, Roboter, der Steuerung, insbesondere visuell und/oder akustisch, angezeigt werden. Beispielsweise kann, sobald eine Fehlfunktion eines Werkzeugs erfasst worden ist, am Werkzeug und/oder einer Anzeige der Steuerung, ein Signal aktiviert werden, welches nach Behebung des Fehlers deaktiviert werden kann. Vorzugsweise wird eine entsprechende Fehlermeldung gespeichert, um während einer automatisierten Bearbeitung aufgetretene und automatisch behobene Fehler analysieren zu können.

Insbesondere, wenn eine oder mehrere Fehlerbehebungen fehlschlagen, optional aber auch sofort beim Auftreten einer Fehlfunktion, kann ein Werkstück ausgesondert, beispielsweise von einem Roboter oder Sortierer entfernt und/oder einem Förderer abtransportiert werden.

In einer bevorzugten Ausführung weist ein allgemeines Fehlermodell zusätzlich oder alternativ eine Konfigurationsmöglichkeit eines Werkzeug-Instandsetzungsmodells, insbesondere einer Werkzeug-Instandsetzungsroutine, vorzugsweise einer Werkzeug-Instandsetzungsbewegung auf. Ein Werkzeug-Instandsetzungsmodell kann beispielsweise das Freiblasen bzw. Spülen einer Düse, etwa einer Kleb- oder Lackierdüse, das erneute Zünden eines Lichtbogens, das Auffüllen eines Vorrates, etwa an Schweißdraht, Lack oder Klebemittel, den Austausch eines Werkzeugs, etwa eines abgebrochenen oder -stumpften Bohrers, oder dergleichen umfassen. Eine Werkzeug-Instandsetzungsbewegung kann insbesondere eine Ablage von der Bearbeitungsbahn umfassen, um während der Instandsetzung das Werkstück nicht zu beeinträchtigen. Zusätzlich oder alternativ kann sie eine kontaktierende Bewegung umfassen, um beispielsweise eine Schweißzange oder Düse reibschlüssig freizumachen, insbesondere eine pendelnde Werkzeugbewegung ("Kratzpendeln"). In einer bevorzugten Weiterbildung weist das Fehlermodell eine Konfigurationsmöglichkeit auf, um Geometrie, Geschwindigkeit und/oder andere Parameter einer solchen Werkzeug-Instandsetzungsbewegung vorzugeben, etwa eine Anzahl und/oder Amplituden von Pendelbewegungen, eine Richtung und/oder Größe einer Ablage von der Bearbeitungsbahn oder dergleichen.

Erfindungsgemä weist ein allgemeines Fehlermodell eine Konfigurationsmöglichkeit einer maximalen Wiederholungszahl und/oder Korrekturzeit zur Behebung eines Fehlers auf. Vorzugsweise werden eine oder mehrere der vorgenannten Werkzeug-Instandsetzungs- oder anderer Fehlerbehebungsmodelle, insbesondere -routinen, mehrfach wiederholt, bis entweder der Fehler behoben ist oder eine maximale Wiederholungszahl und/oder Korrekturzeit erreicht wurde. Dann kann insbesondere ein anderes Fehlerbehebungsmodell, insbesondere eine andere Fehlerbehebungsroutine, ein Aussondern des Werkstücks oder ein Abbruch des Bearbeitungsprozesses folgen.

In einer bevorzugten Ausführung weist ein allgemeines Fehlermodell zusätzlich oder alternativ eine Konfigurationsmöglichkeit für eine Roboteranordnung mit wenigstens zwei kooperierenden Robotern auf. Wie vorstehend ausgeführt, kann es insbesondere bei kooperierenden Robotern zweckmäßig sein, trotz einer Fehlfunktion eine Bearbeitungsbahn fortzusetzen. Um dieses, insbesondere auch bei ungeschulten Anwendern, sicherzustellen, kann eine Konfigurationsmöglichkeit von einer Kooperation von Robotern abhängen. Insbesondere können bestimmte Konfigurationsmöglichkeiten, beispielsweise die Vorgabe eines Anhaltens auf der Bahn, in Abhängigkeit von einer Kooperation von Robotern automatisch eingeschränkt, insbesondere gesperrt, sein.

Erfindungsgemäß hängt eine Konfigurationsmöglichkeit von einem Bearbeitungsfehler ab. Ganz allgemein kann in einer bevorzugten Ausführung eine Konfigurationsmöglichkeit zusätzlich von einem Folgemodell, insbesondere einer Folgeroutine, abhängen. So können für bestimmte, vom Benutzer bei der Konfiguration des Fehlermodells vorgegebene Bearbeitungsfehler nur bestimmte Folgemodelle, insbesondere Folgeroutinen, konfigurierbar, insbesondere wählbar sein. Erfindungsgemäß sind für bestimmte, vom Benutzer bei der Konfiguration des Fehlermodells vorgegebene Bearbeitungsfehler bestimmte Folgemodelle, insbesondere Folgeroutinen nicht wählbar. Beispielsweise kann bei einem Fadenbruch eine Weiterfahrt unter Bearbeitung ausgeschlossen, d.h. nicht konfigurierbar, sein, um ein Leernähen zu verhindern. Umgekehrt kann bei einem Lackieren ein Anhalten nicht konfigurierbar sein, um ein Tropfen auf das Werkstück zu vermeiden. In einer bevorzugten Weiterbildung werden nur konfigurierbare Folgemodelle, insbesondere -routinen, angezeigt.

Unter einem Folgemodell, insbesondere einer Folgeroutine, werden vorliegend insbesondere eine oder mehrere Aktionen der Roboteranordnung, insbesondere eine Bewegung eines oder mehrerer Roboter und/oder eine Aktuierung eines robotergeführten Werkzeugs, verstanden, beispielsweise ein Anhalten, Zurückfahren auf der Bearbeitungsbahn, Anfahren einer Service-Station, ein Kratzpendeln, ein Spülen einer Düse oder Zünden eines Lichtbogens und dergleichen. Solche Folgemodelle können mit einem Bearbeitungsfehler und/oder einem Versagen einer Behebung verknüpft werden. Beispielsweise kann ein Folgemodell mit einem erfassten Fehler, insbesondere entsprechenden Eingängen der Steuerung, logisch verknüpft werden, so dass die Steuerung dieses Folgemodell, insbesondere Roboterbewegung(en) und/oder Werkzeugaktuierungen, ausführt, wenn vorgegebene Werte an den Eingängen anliegen. Eine solche Verknüpfung und ein solches Folgemodell kann ein Fehlermodell im Sinne der vorliegenden Erfindung bilden. Allgemein kann ein Folgemodell insbesondere eine Folgeroutine sein oder umfassen, wobei verallgemeinernd ein Folgemodell insbesondere ein Fehlermodell sein oder umfassen kann, wie es vorstehend erläutert wurde.

In einer bevorzugten Weiterbildung sind in einem Fehlermodell ein oder mehrere Folgemodelle miteinander derart verknüpft, dass mit einem nächsten Folgemodell fortgefahren wird, wenn in einem vorhergehenden Folgemodell der Fehler nicht behoben wurde, d.h. die Behebung versagt hat. Insbesondere kann vorgesehen sein, dass für maximal eine vorgegebene Anzahl oder Korrekturzeit ein vorhergehendes Folgemodell abgearbeitet wird, und dann mit dem nächsten Folgemodell fortgefahren wird, wenn die maximale Anzahl bzw. Korrekturzeit erreicht wurde, ohne dass der Fehler behoben wurde. Beispielsweise kann vorgesehen sein, dass maximal fünf Zündversuche, d.h. ein vorhergehendes Folgemodell in Form einer Aktuierung des Werkzeugs Schweißzange, durchgeführt werden und bei ausbleibendem Lichtbogen, d.h. einem Versagen der Behebung, als nächstes Folgemodell eine Service-Station angefahren wird.

Insbesondere, um das Auftreten eines Fehlers, mit dem ein Folgemodell verknüpft ist, oder ein Versagen einer Behebung, d.h. ein Fortbestehen bzw. Andauern eines Fehlers, zu erfassen, weist ein allgemeines Fehlermodell in einer bevorzugten Ausführung eine Konfigurationsmöglichkeit einer Fehlererkennung auf. Insbesondere können ein oder mehrere Eingänge, Grenzwerte für an diese von Erfassungseinrichtungen wie Sensoren gesandte Erfassungswerte, und/oder Verknüpfungen solcher Eingänge vorgegeben werden. So kann beispielsweise ein Eingang mit einem Klebmittelflusssensor und einer Folgeroutine zur Behebung einer Verstopfung einer Klebepistolendüse verknüpft werden.

In einer bevorzugten Ausführung erfolgt das Einrichten und/oder Konfigurieren eines Fehlermodells graphikbasiert, insbesondere, indem ein Anwender graphisch dargestellte Menüpunkte auswählt, etwa durch Antippen oder Anklicken, und diese durch Zahleneingaben, Verschiebung virtueller Stellglieder oder dergleichen parametriert.

Weitere Vorteile und Merkmale ergeben sich aus den Unteransprüchen und den Ausführungsbeispielen. Hierzu zeigt, teilweise schematisiert, die einzige:

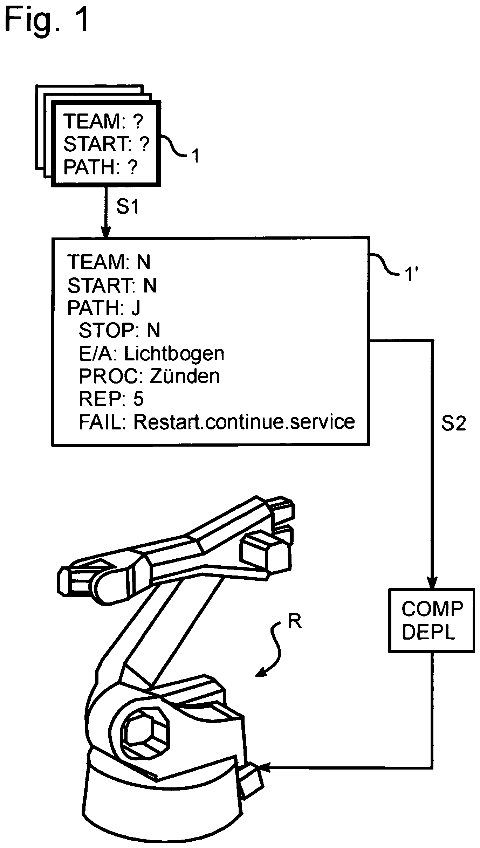

- Fig. 1:: ein Mittel und ein Verfahren nach einer Ausführung der vorliegenden Erfindung.

In einem Ausführungsbeispiel möchte der Anwender für ein Abreißen eines Lichtbogens bei einem robotergeführten Schweißen als Fehlermodell, insbesondere als Fehlerroutine, ein mehrfaches fliegendes Zünden konfigurieren.

Fig. 1 zeigt ein Mittel zum Einrichten eines allgemeinen Fehlermodells 1 für eine Gruppe unterschiedlicher Bearbeitungsprozesse mit vorgegebenen Bearbeitungsfehlern in Form mehrerer Datenobjekte, von denen eines (in Fig. 1 umrandet hervorgehoben) durch den Anwender, beispielsweise durch Antippen oder -klicken, in einem Schritt S1 ausgewählt wird.

Anschließend wird dieses ausgewählte Fehlermodell durch Eingabe entsprechender Flags weiter zu einem individuellen Fehlermodell 1' für einen bestimmten Bearbeitungsfehler eines Prozesses der Gruppe konfiguriert. Im Ausführungsbeispiel wird durch Setzen eines "Nein" ("N")-Flags vom Anwender angegeben, dass es sich nicht um einen Bearbeitungsprozess kooperierender Roboter handelt (Fig. 1: "TEAM: N"). Es soll auch kein Startfehler (Fig. 1: "START: N"), sondern ein Bahnfehler während der Abarbeitung des Prozesses behoben werden (Fig. 1: "PATH: J").

Wie aus dem Vergleich des allgemeinen und des ausgewählten und durch Setzen des Bahnfehlerflags weiter konfigurierten Fehlermodells 1' erkennbar, werden mit der Wahl einer Bahnfehlerroutine (Fig. 1: "PATH: J") weitere Konfigurierungsmöglichkeiten zur Verfügung gestellt. Nun kann der Anwender auswählen, ob bei einem Fehler angehalten werden soll (Fig. 1: "STOP: N"). Er konfiguriert zudem eine Fehlererkennung, indem er als maßgeblichen Eingang einen den Lichtbogen überwachenden Sensor vorgibt (Fig. 1: "E/A: Lichtbogen"). Als Folgemodell, insbesondere Folgeroutine, verknüpft er mit einer Fehlermeldung auf diesem Eingang ein erneutes Zünden (Fig. 1: "PROC: Zünden") und gibt vor, diese Folgeroutine maximal 5 mal zu wiederholen (Fig. 1: "REP: 5"), sofern nicht vorher die Fehlererkennung feststellt, dass der Lichtbogen wieder funktioniert.

Sofern diese Behebung einer Fehlfunktion des Schweißwerkzeugs versagt, d.h. die Fehlererkennung auch nach den 5 Zündversuchen feststellt, dass der Lichtbogen noch nicht funktioniert, verknüpft der Anwender die Folgeroutine "Zünden" mit einem nächsten Folgemodell, die ein erneutes Abfahren der Bearbeitungsbahn von Anfang an nach einem Aufsuchen einer Service-Station vorgibt (Fig. 1: "FAIL: Restart.continue .service").

Auf diese Weise kann der Anwender einfach und intuitiv durch Konfigurieren des allgemeinen Fehlermodells 1 in wenigen Schritten ein gewünschtes spezifisches Fehlermodell für einen bestimmten Fehler, im Ausführungsbeispiel den Abriss des Lichtbogens beim robotergestützten Schweißen, vorgeben. Dieses Fehlermodell wird anschließend in einem Schritt S2 durch ein Mittel COMP DEPL zum Übertragen des konfigurierten Fehlermodells, insbesondere einer konfigurierten Fehlerroutine, an eine Steuerung eines Roboters R übersetzt, in das Bearbeitungsprogramm eingebunden und auf die Steuerung übertragen.

Rein exemplarisch werden nachfolgend noch einige mögliche Ausführungen und Aspekte der vorliegenden Erfindung erläutert.

Ein Startfehler, infolge dessen der Bearbeitungsprozess nicht startet bzw. nicht gestartet werden kann, kann zum Beispiel vorliegen, wenn ein robotergeführtes Werkzeug nicht reagiert, ein Lichtbogen nicht zündet, ein Bohrer sich nicht dreht, ein Laser nicht leuchtet, ein Klebstoff nicht austritt, ein Druck nicht aufgebaut werden kann oder ein Greifer sich nicht öffnet. Ein solcher Fehler kann insbesondere immer dann auftreten, wenn der Prozess an einer Stelle auf der Bahn beginnen soll und das entsprechende Kommando auch passend gegeben wurde. Es kann unterschieden werden, ob fliegend, also mit sich bewegendem Roboter oder im Stillstand gestartet wird.

Ein Bahnfehler, infolge dessen der Prozess außerplanmäßig während der Bahnfahrt unterbricht, kann zum Beispiel vorliegen, wenn ein Faden oder Lichtbogen abreißt, Klebstoff oder Farbe leer ist, eine Kühlung ausfällt, ein Not-Aus aktiviert oder eine Nutzlast verloren wird, außerplanmäßig nichts gegriffen wurde, eine Kollision aufgetreten ist oder ein Robo-Team Partner einen Fehler gemeldet hat.

Bei einem Startfehler kann eine Starthilfe-Prozedur 0 bis N mal aufgerufen und danach der Vorgang abgebrochen werden. Im Rahmen der Starthilfe kann auf der Bahn eine Fehlerbehebung versucht werden, zum Beispiel durch Kratzpendeln beim Schweißen. Wenn dies nicht ausreicht, kann zur Service-Station gefahren werden.

Bei einem Bahnfehler kann fortgefahren werden, ohne anzuhalten ("fliegende Behebung"). Die Behebungs-Prozedur sollte dabei nicht beliebig lange dauern und nicht beliebig oft ausgeführt werden. Kann der Fehler nicht behoben werden, dann wird angegeben, ob eine Folgestrategie erforderlich ist, ob der gesamte Vorgang am Bauteil abgebrochen wird oder die nächste Prozessbahn begonnen wird. So können zum Beispiel, wenn beim Bahnschweißen der Lichtbogen abreißt, maximal 5 "fliegende" Zündversuche unternommen werden.

Bahnfehler können auch durch Anhalten und Wiederaufsetzen des Bearbeitungsprozesses behoben werden, um danach den Prozess fortzuführen, insbesondere mit einem Überlappungsversatz. Hierzu kann das Werkzeug so schnell wie möglich angehalten werden. Die Behebungs-Prozedur wird sofort nach Fehlerdetektion aktiviert. Ist der Fehler behoben, kann an gleicher Stelle mit der Bearbeitung fortgefahren werden (Überlappungsversatz = 0). Kann der Fehler nicht behoben werden, dann wird angegeben, ob eine Folgestrategie erforderlich ist, ob der gesamte Vorgang am Bauteil abgebrochen wird, oder die nächste Prozessbahn begonnen wird. Ist beispielsweise eine Fehlerbehebung während des Bahnfahrens gescheitert, hat zum Beispiel ein Lichtbogen nicht schnell genug wieder gezündet, wird vor Ort ein Kratzpendeln durchgeführt. Ist bei einem anderen Bearbeitungsprozess Druckluft für ein Polierwerkzeug ausgefallen, wird angehalten und die Bearbeitung fortgesetzt, wenn das Medium wieder verfügbar ist. Gleichermaßen kann mit einem Überlappungsversatz > 0 das Werkzeug auf der Bahn zur Fehlerstelle und darüber zurückbewegt werden, um eine Überlappung, relativ zur Fehlerposition zu erreichen. Die Überlappung kann in einem vorgegebenen Abstands-Offset zur Originalbahn erfolgen. Dieser Abstand wird innerhalb der Überlappung abgebaut. Ist zum Beispiel ein Lichtbogen während der Bahnfahrt abgerissen, fährt der Roboter auf der Bahn 70 mm zurück und hebt sich dabei um 3 mm von der Bahn ab. Der Prozess wird 70 mm vor der Fehlerstelle erneut gestartet und der Abstand dabei sukzessive von 3 auf 0 mm abgebaut.

Wird eine Service-Station angefahren, kann die Bahn an einer Stelle mit Überlappung relativ zur Fehlerposition wieder aufgenommen werden. Auch diese Überlappung kann in einem vorgegebenen Abstands-Offset zur Originalbahn erfolgen. Der Abstands-Offset wird an der Fehlerstelle auf der Überlappungslänge wieder abgebaut. Ist zum Beispiel ein Schweißdraht zu Ende, ein Klebstoff leer, eine Punktschweiß-Kappe verschlissen, muss der Roboter zu Serviceposition fahren, um den Fehler zu beheben.

Eine Bearbeitungsbahn kann nach einem Fehler bis zum Ende durchgefahren werden, ohne den Prozess auszuführen. Es kann konfiguriert werden, dass bereits beim Auftreten des Fehlers weiter gefahren wird, ohne eine Behebung zu versuchen, oder diese Strategie kann sich fehlgeschlagenen Versuchen anschließen.

Nach Erreichen des Endes der Bahn, wird diese vorzugsweise vollständig von Beginn an neu gestartet, der Roboter fährt also bahntreu oder auf einem gesonderten Rückzugsweg an den Bahnanfang zurück. Optional kann am Ende der Bahn eine Service-Station angefahren werden.

Beim Neustart kann die Bearbeitung vollständig neu begonnen und damit bis zum Fehler doppelt ausgeführt werden. Beispielsweise fährt, wenn der Faden einer robotergeführten Nähmaschine reißt, der Roboter "nähend" ohne Faden bis zum Ende weiter, weil die Bewegung nicht unterbrochen werden darf, da die Synchronisierung von Nadel und Roboterbewegung nicht problemlos unterbrechbar ist. Anschließend wird an einer Service-Station ein neuer Faden eingefädelt, zum Bahnbeginn zurückgefahren und die Naht erneut genäht; Bis zum Fehler ist die Naht damit doppelt.

Der Prozess kann auch bei der Fehlerstelle fortgesetzt, insbesondere mit Überlappung relativ zur Fehlerposition gestartet werden, so dass beim zweiten Durchlauf bis auf die Überlappung nur der fehlerhafte Teil der Prozessbahn behandelt wird. Geht zum Beispiel der Klebstoff einer Klebe-Applikation während der Bahn zu Ende, muss die Bahn bis zum Ende gefahren werden, wenn nicht sicher gewährleistet werden kann, dass die Service-Station sicher von einer beliebigen Position auf der Bahn angefahren werden kann. Erst danach kann zur Service-Station gefahren und Klebstoff nachgefüllt und entlüftet werden. Danach wird die Bahn mit einem Abstands-Offset von vorn begonnen und mit einer Überlappung relativ zur Fehlerposition an der Fehlerstelle der Klebstoff zugeschaltet und der Abstands-Offset auf der Überlappungslänge abgebaut.

Bei einem Fehler eines von mehreren kooperierenden Robotern können die anderen Roboter zunächst unbeeinflusst weiterarbeiten. Erst wenn die fliegenden Maßnahmen nicht greifen, wird der gesamte Vorgang unterbrochen und alle gemeinsam starten neu. Gleichermaßen kann im Fehlerfalle eines Roboters sofort gemeinsam unterbrochen werden, der fehlerverursachende Roboter behebt den Fehler, bevor alle Roboter gemeinsam weiterarbeiten.

Der Anwender kann in einer bevorzugten Ausführung zu jedem Fehler eine eigene Fehlererkennung vorgeben, die vorzugsweise mit vorgegebener Frequenz prüft und im Falle des Eintretens des betreffenden Fehlers die Folgeroutine aktiviert.

Die Konfiguration eines Anfahrens einer Service-Station kann insbesondere die Vorgabe bzw. Konfiguration dort auszuführender Fehlerbehebungsroutinen umfassen. Verwendet der Anwender also etwa eine Schweißpistole auf seinen Bahnen, so kann er vorzugsweise auch die Maßnahmen, insbesondere Bewegungen und/oder Aktuierungen, vorgeben, die an der Service-Station ausgeführt werden müssen, um etwaige Fehler zu beheben, wie zum Beispiel Schweißdraht ablängen, Verzunderung entfernen, neuen Draht einfädeln und ablängen.

### Bezugszeichenliste

- 1: (Mittel zum Einrichten eines) allgemeines/n Fehlermodell(s)
- 1': Mittel zum Konfigurieren/konfiguriertes Fehlermodell
- R: Roboter

## Patentansprüche

1. Verfahren zum Steuern einer Roboteranordnung mit wenigstens einem Roboter (R), mit den Schritten:
Einrichten wenigstens eines allgemeinen Fehlermodells, welches als eine allgemeine Fehlerroutine (1) ausgebildet ist für eine Gruppe unterschiedlicher Bearbeitungsprozesse mit vorgegebenen Fehlfunktionen eines robotergeführten Werkzeugs, wobei die Bearbeitungsprozesse der Gruppe sich durch Art und/oder Funktion robotergeführter Bearbeitungswerkzeuge unterscheiden (S1);
Konfigurieren der Fehlerroutine für wenigstens eine bestimmte der Fehlfunktionen (S2); und
Übertragen der konfigurierten Fehlerroutine (1') an eine Steuerung der Roboteranordnung, wobei die allgemeine Fehlerroutine eine Konfigurationsmöglichkeit einer maximalen Wiederholungszahl (REP) und/oder Korrekturzeit zur Behebung eines Fehlers und einer Verknüpfung zwischen einem Versagen einer Behebung (FAIL) und einem Folgemodell umfasst und eine Konfigurationsmöglichkeit von einer Fehlfunktion abhängt, wobei für bestimmte, vom Benutzer bei der Konfiguration der Fehlerroutine vorgegebene Fehlfunktionen bestimmte Folgemodelle nicht wählbar sind.

2. Verfahren nach Anspruch 1, **dadurch gekennzeichnet, dass** eine der vorgegebenen Fehlfunktionen einen Startfehler (START) am Beginn eines Bearbeitungsprozesses oder einen Bahnfehler (PATH) während der Abarbeitung des Prozesses umfasst.

3. Verfahren nach einem der vorhergehenden Ansprüche, **dadurch gekennzeichnet, dass** eine allgemeine Fehlerroutine eine Konfigurationsmöglichkeit
eines Weiterfahrens entlang einer Bearbeitungsbahn mit oder ohne Bearbeitung, eines Anhaltens auf einer Bearbeitungsbahn (STOP),
eines bahntreuen oder bahnfernen erneuten Anfahrens eines bereits überfahrenen Punktes einer Bearbeitungsbahn,
eines erneuten Abfahrens eines bereits überfahrenen Abschnittes einer Bearbeitungsbahn mit oder ohne Bearbeitung,
eines Anfahrens einer Service-Station (Restart.continue.service),
einer Fehlermeldung, und/oder
eines Aussonderns eines Werkstückes
umfasst.

4. Verfahren nach Anspruch 3, **dadurch gekennzeichnet, dass** ein erneutes Abfahren eines bereits überfahrenen Abschnittes einer Bearbeitungsbahn bahntreu oder bahnfern, insbesondere unter Annäherung an die Bearbeitungsbahn, erfolgt.

5. Verfahren nach einem der vorhergehenden Ansprüche, **dadurch gekennzeichnet, dass** ein allgemeines Fehlermodell eine Konfigurationsmöglichkeit eines Werkzeug-Instandsetzungsmodells (PROC), insbesondere einer Werkzeug-Instandsetzungsbewegung, umfasst.

6. Verfahren nach einem der vorhergehenden Ansprüche, **dadurch gekennzeichnet, dass** eine allgemeinee Fehlerroutine eine Konfigurationsmöglichkeit (TEAM) für eine Roboteranordnung mit wenigstens zwei kooperierenden Robotern umfasst.

7. Verfahren nach einem der vorhergehenden Ansprüche, **dadurch gekennzeichnet, dass** eine allgemeine Fehlerroutine eine Konfigurationsmöglichkeit wenigstens einer Fehlererkennung (E/A),
eines Folgemodells (PROC, Restart.continue.service), und/oder
einer Verknüpfung zwischen einer der Fehlfunktionen und einem Folgemodell umfasst.

8. Verfahren nach einem der vorhergehenden Ansprüche, **dadurch gekennzeichnet, dass** das Einrichten und/oder Konfigurieren eines Fehlermodells graphikbasiert erfolgt.

9. Verfahren nach einem der vorhergehenden Ansprüche, **dadurch gekennzeichnet, dass** eine Konfigurationsmöglichkeit von einer Kooperation von Robotern und/oder einem Folgemodell abhängt.

10. Mittel zum Steuern einer Roboteranordnung mit wenigstens einem Roboter (R), mit:
einem Mittel (1) zum Einrichten wenigstens einer allgemeinen Fehlerroutine für eine Gruppe unterschiedlicher Bearbeitungsprozesse mit vorgegebenen Fehlfunktionen eines robotergeführten Werkzeugs;
einem Mittel (1') zum Konfigurieren der Fehlerroutine für wenigstens eine bestimmte der Fehlfunktionen; und
einem Mittel (COMP DEPL) zum Übertragen der konfigurierten Fehlerroutine an eine Steuerung der Roboteranordnung,
**dadurch gekennzeichnet, dass** das Mittel zum Durchführen eines Verfahrens nach einem der vorhergehenden Ansprüche eingerichtet ist.

## Claims

1. A method of controlling a robot assembly comprising at least one robot (R), the method comprising the steps of:
setting up at least one general fault model, which is embodied as a general fault routine (1) for a group of different treatment processes with predetermined malfunctions of a robot-guided tool, wherein the treatment processes of the group differ as regards the type and / or function of robot-guided treatment tools (S1);
configuring the fault routine for at least one particular one of the malfunctions (S2); and
transferring the configured fault routine (1') to a control device of the robot assembly, wherein the general fault routine comprises a configuration option of a maximum number of repetitions (REP) and / or of a correction time for rectifying a fault and a link between a failure of a rectification (FAIL) and a follow-on model, and a configuration option depends on a malfunction, wherein it is not possible to select specific follow-on models for specific malfunctions which are specified by the user in the course of the configuration of the fault routine.

2. The method according to claim 1, **characterised in that** one of the specified malfunctions comprises a start error (START) at the start of a treatment process or a path error (PATH) during the execution of the process.

3. The method according to any one of the preceding claims, **characterised in that** a general fault routine comprises a configuration option of
continuing along a treatment path with or without treatment,
performing a stop on a treatment path (STOP),
performing a new approach to an already traversed point of a treatment path, which new approach is on the path or remote from the path,
renewed traversing, with or without treatment, a section of a treatment path, which section has already been traversed,
approaching a service station (Restart.continue.service),
an error message, and / or
the removal of a workpiece.

4. The method according to claim 3, **characterised in that** a renewed traversing of a section of a treatment path, which section has already been traversed, takes place on the path or remote from the path, in particular with an approximation of the treatment path.

5. The method according to any one of the preceding claims, **characterised in that** a general fault model comprises a configuration option of a tool repair model (PROC), in particular of a tool repair movement.

6. The method according to any one of the preceding claims, **characterised in that** a general fault routine comprises a configuration option (TEAM) for a robot assembly with at least two cooperating robots.

7. The method according to any one of the preceding claims, **characterised in that** a general fault routine comprises a configuration option of at least a fault detection (E / A),
a follow-on model (PROC, Restart.continue.service), and / or
a link between one of the malfunctions and a follow-on model.

8. The method according to any one of the preceding claims, **characterised in that** the setting up and / or configuring of a fault model is carried out graphically.

9. The method according to any one of the preceding claims, **characterised in that** a configuration option depends on a cooperation of robots and / or on a follow-on model.

10. Means for controlling a robot assembly comprising at least one robot (R), comprising:
means (1) for setting up at least one general fault routine for a group of different treatment processes with predetermined malfunctions of a robot-guided tool;
means (1') for configuring the fault routine for at least one particular one of the malfunctions; and
means (COMP DEPL) for transmitting the configured fault routine to a control device of the robot assembly,
**characterised in that** the means is arranged to carry out a method according to any one of the preceding claims.

## Revendications

1. Procédé de commande d'un agencement de robot avec au moins un robot (R), avec les étapes de :
mise en place d'au moins un modèle d'erreur général, lequel est réalisé en tant que routine d'erreur générale (1) pour un groupe de différents processus d'usinage avec des dysfonctionnements prédéfinis d'un outil guidé par robot, dans lequel les processus d'usinage du groupe se distinguent par la nature et/ou la fonction d'outils d'usinage guidés par robot (S1) ;
configuration de la routine d'erreur pour au moins un dysfonctionnement déterminé des dysfonctionnements (S2) ; et
transmission de la routine d'erreur configurée (1') à une commande de l'agencement de robot, dans lequel la routine d'erreur générale comprend une possibilité de configuration d'un nombre de répétition maximum (REP) et/ou temps de correction pour l'élimination d'une erreur et d'une liaison entre un échec d'une élimination (FAIL) et un modèle de séquence et une possibilité de configuration dépend d'un dysfonctionnement, dans lequel des modèles de séquence déterminés ne peuvent pas être sélectionnés pour des dysfonctionnements déterminés prédéfinis par l'utilisateur lors de la configuration de la routine d'erreur.

2. Procédé selon la revendication 1, **caractérisé en ce qu'**un des dysfonctionnements prédéfinis comprend une erreur de démarrage (START) au début d'un processus d'usinage ou une erreur de voie (PATH) pendant le traitement du processus.

3. Procédé selon l'une quelconque des revendications précédentes, **caractérisé en ce qu'**une routine d'erreur générale comprend une possibilité de configuration
d'une poursuite le long d'une voie d'usinage avec ou sans usinage,
d'un arrêt sur une voie d'usinage (STOP),
d'un redémarrage fidèle à la voie ou distant de la voie d'un point déjà parcouru d'une voie d'usinage,
d'un nouveau parcours d'une section déjà parcourue d'une voie d'usinage avec ou sans usinage,
d'un démarrage d'une station de service (Restart.continue.service),
d'un message d'erreur, et/ou
d'un retrait d'une pièce.

4. Procédé selon la revendication 3, **caractérisé en ce qu'**un nouveau parcours d'une section déjà parcourue d'une voie d'usinage a lieu fidèle à la voie ou distant de la voie, en particulier par approche d'une voie d'usinage.

5. Procédé selon l'une quelconque des revendications précédentes, **caractérisé en ce qu'**un modèle d'erreur général comprend une possibilité de configuration d'un modèle de remise en état d'outil (PROC), en particulier d'un mouvement de remise en état d'outil.

6. Procédé selon l'une quelconque des revendications précédentes, **caractérisé en ce qu'**une routine d'erreur générale comprend une possibilité de configuration (TEAM) pour un agencement de robot avec au moins deux robots coopérants.

7. Procédé selon l'une quelconque des revendications précédentes, **caractérisé en ce qu'**une routine d'erreur générale comprend une possibilité de configuration d'au moins
une détection d'erreur (E/A),
un modèle de séquence (PROC, Restart.continue.service), et/ou
une liaison entre un des dysfonctionnements et un modèle de séquence.

8. Procédé selon l'une quelconque des revendications précédentes, **caractérisé en ce que** la mise en place et/ou la configuration d'un modèle d'erreur se fait à base de graphique.

9. Procédé selon l'une quelconque des revendications précédentes, **caractérisé en ce qu'**une possibilité de configuration dépend d'une coopération de robots et/ou d'un modèle de séquence.

10. Moyen de commande d'un agencement de robot avec au moins un robot (R), avec :
un moyen (1) de mise en place d'au moins une routine d'erreur générale pour un groupe de différents processus d'usinage avec des dysfonctionnements prédéfinis d'un outil guidé par robot ;
un moyen (1') de configuration de la routine d'erreur pour au moins un dysfonctionnement déterminé des dysfonctionnements ; et
un moyen (COMP DEPL) de transmission de la routine d'erreur configurée à une commande de l'agencement de robot,
**caractérisé en ce que** le moyen de réalisation d'un procédé est aménagé selon l'une quelconque des revendications précédentes.
